# EUROPEAN PATENT APPLICATION

(11) **EP 1 529 586 A1**
(43) Date of publication of application: **11.05.2005**
(21) Application number: 03256964.2
(22) Date of filing: 04.11.2003
(51) Int. Cl.: B23D 51/10

(54) **Clamping device**

(71) Applicant: GMCA PTY Ltd, Campbellfield, Victoria 3061 (AU)
(72) Inventor: Park, Keith, Ellerton, York YO42 4NX (GB)
(74) Representative: Wood, Graham

(57) **Abstract**

A clamping device (2) is provided for a tool component, such as a saw blade (4). The clamping device (2) includes a housing (6) with a saw blade (4) location channel (70) defined therein for the location of at least a part of the saw blade (4) in use. Clamping members (36,38) are movably mounted in the housing (6) and can be moved between a locked position, wherein the saw blade (4) is clamped between one or more surfaces of said clamping members (36,38) and one or more walls (72) defining the saw blade location channel (70), and an unlocked position, wherein the saw blade (4) can be inserted or removed from the clamping device (2).

## Description

This invention relates to a clamping device for use with a tool component for allowing releasable clamping of said tool component with respect to a tool.

Although the following description refers almost exclusively to a clamping device for use with a saw blade of a power tool, it will be appreciated by persons skilled in the art that the clamping device of the present invention could be used with any tool component for use with any manual or powered tool.

Tools, such as jigsaws, power saws or reciprocating saws, are typically provided with releasable blade clamping means for allowing saw blades to be replaced, removed and/or repaired as and when required. There are many different types of blade clamping means available and one example is disclosed in EP0587498 wherein a support is provided on a slideway which defines an engagement passage for a tail end of a saw blade. A retractable locking member is secured to the support and interacts directly with a protrusion portion on the saw blade. In order for a user to release the blade, they are required to move the retractable locking member. Since this release mechanism requires the user to directly come into contact with the blade, if the user accidentally slips during this manoeuvre they are likely to cut themselves on the blade, which is undesirable.

A further example of a blade clamping arrangement is disclosed in DE4313718. In this arrangement, two clamping jaws are provided which are radially movable relative to the longitudinal axis of a blade stroke shaft. In a clamped position jaws are pressed against opposite flat sides of the blade by a wedge mechanism. The wedge mechanism is formed by a screwcap having an inner conical surface. The outer surfaces of the clamping jaws are shaped so that movement of the screw cap with respect to the jaws moves the jaws between clamped and unclamped positions. Since the blade release mechanism is likely to require multiple rotations of the screw cap to move the same between said clamped and unclamped positions, this increases the time taken for a user to attach or release a blade.

Problems associated with other blade clamping arrangements include the requirement of special tools to enable the release and/or attachment of the blade to the tool. In addition, other clamping arrangements require the tool component, such as a saw blade, to be provided in a U-type formation (a slot or recess is provided on the blade) or a T-type formation (protrusion portions are provided on opposing edges of the blade) for clamping to take place. However, most clamping devices do not allow for the clamping of both types of saw blade. Furthermore, if the blade or tool component breaks whilst it is clamped in the clamping arrangement, it can often be difficult to remove the broken blade or component therefrom.

It is therefore an aim of the present invention to provide a clamping device which allows quick and easy release of a tool component therefrom, even if the tool component is broken.

It is a further aim of the present invention to provide a clamping device which does not require specific formations to be provided on the tool component to allow clamping to take place.

According to a first aspect of the present invention there is provided a clamping device for a tool component, said clamping device including a housing with a tool component location channel defined therein for the location of at least a part of a tool component in use, said clamping device further including one or more clamping members movably mounted in said housing, characterised in that said clamping members are capable of moving between a locked position, wherein the tool component can be clamped between one or more surfaces of said clamping members and one or more walls defining the tool component location channel, and an unlocked position, wherein the tool component can be inserted and/or removed from the clamping device.

Preferably user actuation means are provided to move said clamping members between said locked and unlocked positions. At least part of the user actuation means is accessible from the exterior of the device housing.

Preferably the user actuation means are resiliently biased to bias the clamping members to the locked position. In use, a user is typically required to move the user actuation means in such a manner so as to overcome the resilient biasing force of the resilient biasing means, thereby moving the clamping members to an unlocked position.

Preferably the resiliently biasing means is in the form of a spring. The spring is typically located in the cavity defined in the housing.

Preferably the one or more clamping members are pivotally mounted in the housing for movement within a cavity of the housing. This cavity is typically in communication with the tool component location channel also defined in the housing.

In a preferred embodiment two clamping members are movably mounted in the housing. The two clamping members are typically located a spaced distance apart in the housing and move substantially simultaneously on movement of the user actuation means.

Further preferably the two clamping members are moved in parallel to each other on movement of the user actuation means.

In an alternative embodiment, the clamping members are mounted on opposing walls in the housing and said clamping members are moved in a substantially opposite direction to each other.

Preferably the clamping members have a first end movably mounted in the housing and a second free end which is located with said user actuation means. The second free end is typically opposite to said first mounted end.

The second free end of the clamping members can be attached via suitable attachment means or integrally formed with said user actuation means. In a preferred embodiment, a recess or aperture is provided in the user actuation means in which the second free end of the clamping members is located in use.

Preferably at least one slot is provided in said clamping members and, in said unlocked position, said slot is aligned with and substantially parallel to the tool component location channel, thereby allowing a portion of the tool component to be located therethrough or therewith in use as it is located in the tool component location channel.

On movement of the clamping members to said locked position, the slot is typically moved to a position wherein it is out of alignment with the tool component location channel, thereby clamping the tool component in position.

Typically at least one edge of the walls defining a lower part of the slot in the clamping members engages against a first surface of the tool component and an opposite edge of the walls defining an upper part of the slot in the clamping members engages with a second surface of the tool component.

In one embodiment the one or more clamping members are in the form of an elongate arm with the at least one slot provided transversally therethrough. Thus, the slot has an opening on a front surface and a rear surface of the arm.

Preferably the tool component is a saw blade. The saw blade typically has two flat surfaces which are substantially greater in surface area than two end surfaces of the blade.

Preferably the flat surfaces of the blade are clamped between the housing and the clamping members in a locked position.

In one embodiment the housing is provided in two or more parts which are joined together on assembly of the device via any conventional joining means.

The housing of the clamping device is typically attached to a scroll mechanism of a saw in use via attachment means. The attachment means can be provided in any required shape.

According to a second aspect of the present invention there is provided a clamping device for clamping a tool component, said clamping device including a housing defining a cavity therein for the location of a portion of the tool component, one or more clamping members movably mounted in said cavity and said clamping members movable between a first locked position, wherein the tool component is clamped by said clamping members in a required position in the housing, and a second unlocked position, wherein the tool component is releasable from the clamping members, characterised in that the one or more clamping members are provided with one or more slots through which a part of the tool component is located through or removed from in said unlocked position.

According to a further aspect of the present invention there is provided a method of using a clamping device for a tool component, said clamping device including a housing with a tool component location channel defined therein and one or more clamping members movably mounted in said housing, characterised in that said method includes the steps of moving said clamping members between an unlocked position, wherein at least part of the tool component can be located in the tool component location channel and a locked position, wherein the tool component is clamped between one or more surfaces of said clamping members and one or more walls defining the tool component location channel.

The advantage of the present invention is that the clamping device allows engagement of any tool component and does not require the tool component to be in any particular shape or form. Furthermore, the present invention allows easy and quick release of a blade or tool component therefrom, even if the blade or tool component breaks whilst clamped in the clamping device.

An embodiment of the present invention will now be described with reference to the accompanying drawings, wherein:
Figure 1a is a cross sectional view taken through a clamping device according to an embodiment of the present invention in a locked position;
Figure 1b is a side view of the clamping device in figure 1a with a side wall of the housing removed in a locked position;
Figure 1c is a cross sectional view taken through the clamping device in figure 1a in an unlocked position;
Figure 2a is an exploded view of part of the clamping device in figure 1 b;
Figure 2b is an exploded view of the clamping device in figure 1a from the front;
Figure 2c is an exploded view of the clamping device in figure 2b from the rear; and
Figures 3a-3h show various views of the clamping device.

Referring to the figures, there is illustrated a blade clamping device 2 for use with a power saw (not shown) for allowing clamping and unclamping of a saw blade 4 therewith.

The blade clamping device 2 includes a housing 6 having a front surface 8, a rear surface 10, side walls 12, 14, a top wall 16 and a base wall 18. In this embodiment, the housing is provided in two parts 20, 22 which are joined together via screws 24, 26 located through recessed apertures 28 in part 20 and recessed apertures 30 in part 22. A cavity is formed between the two parts 20, 22 when joined together.

A slot 32 is provided in base wall 18 for the location of an upper portion 4' of saw blade 4 therethrough. A collar 34 is provided on top wall 16 for attachment to a reciprocating shaft (not shown) of the power saw in use.

Clamping members in the form of two arms 36, 38 are pivotally mounted in the housing 2 and are pivotable through an acute angle within the cavity thereof. More specifically, each arm 36, 38 includes a first end 40 which is substantially cylindrical in shape to allow rotation in a complementary shaped recess 42 in part 20. Recess 42 opens into an outwardly tapering portion 44 which defines the outermost boundaries/limits of movement of arms 36, 38. In this embodiment, recess 42 is substantially wedge shaped.

A second free end 46 is provided opposite first end 40 of each arm and said second free end is located in recesses 48, 50 of user actuation means 52. A neck portion 54 is provided between first end 40 and second end 46. A slot 56 is provided in each arm 36, 38 adjacent the second ends 46 thereof for the insertion of upper portion 4' of blade 4 therethrough in use. The length of the slot is slightly larger than the width 'w' of the saw blade.

The user actuation means 52 is slidably mounted in the housing between parts 20, 22 and a gripping portion 58 protrudes from an aperture 60 defined between parts 20, 22. A plurality of ribs 62 are provided on the gripping portion 58 to allow a user to easily grip the same in use. Gripping portion 58 is attached to member 64 and recesses 48, 50 are provided adjacent the edge of member 64 opposite to gripping portion 58.

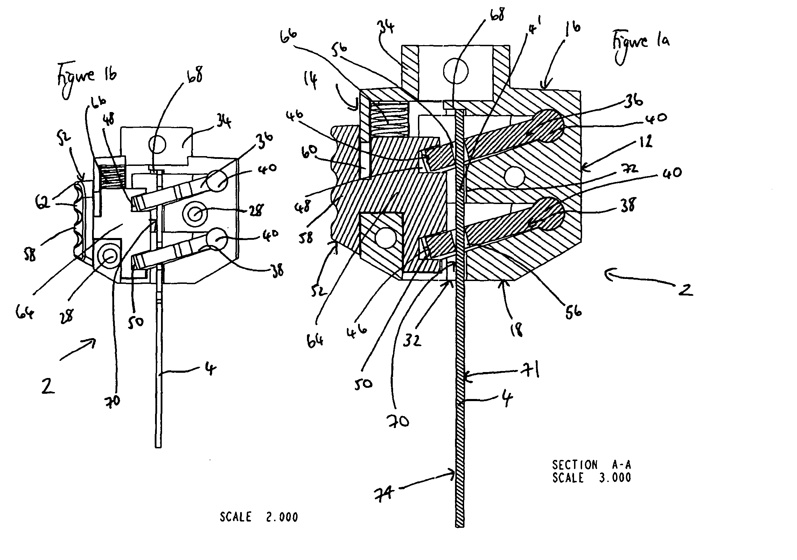

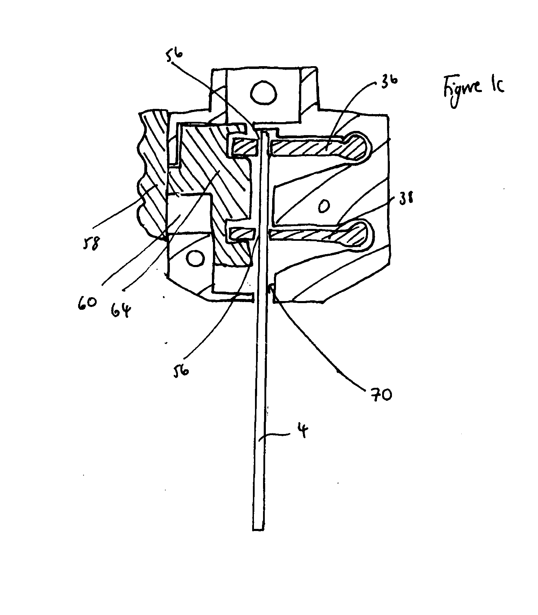

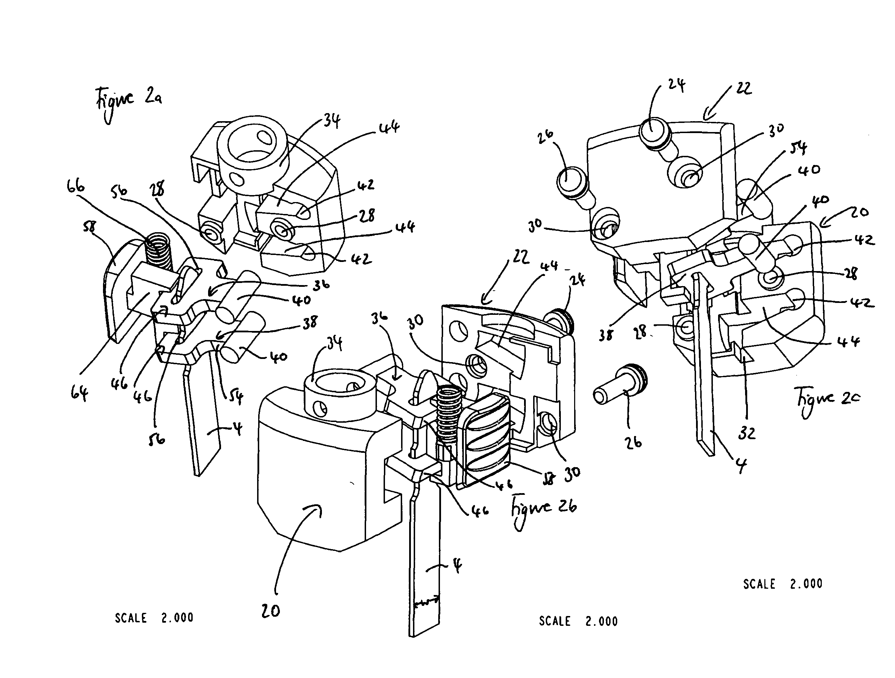

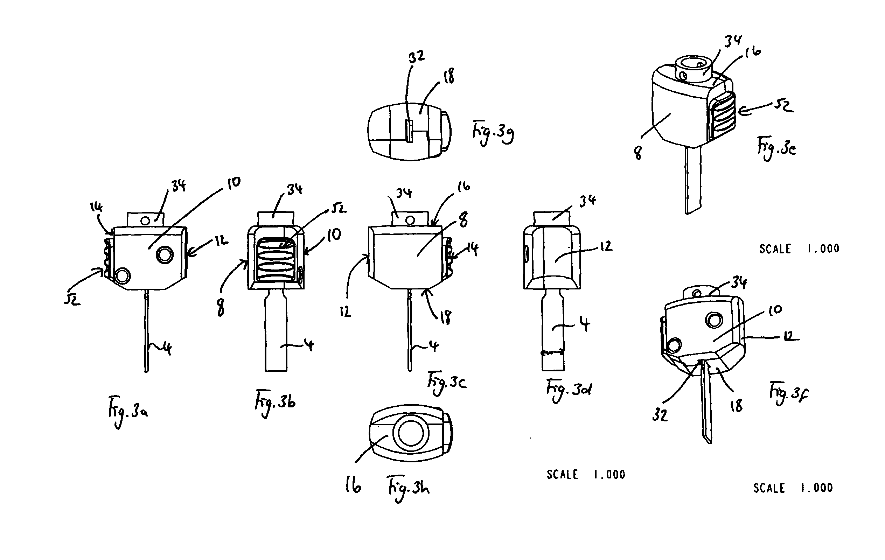

Member 64, and thus gripping portion 58, are resiliently biased by a spring 66 to a downwardly or locked position, as shown in figures 1a, 1b.

In use of the blade clamping device, a user is required to move gripping portion 58 relative to housing 6 in an upwardly direction with sufficient force to overcome the resilient biasing effect of spring 66. This movement causes substantially simultaneous pivotal movement of arms 36, 38 to an unlocked position due to the free ends 46 of arms 36, 38 being located in recesses 48, 50.

In this unlocked position, as shown in figure 1c, the slots 56 of arms 36, 38 become aligned with the blade location channel passing between slot 32 in base wall 18 to a recess 68 on the inside surface of top wall 16. Thus, in use in this embodiment, the slots are substantially vertically orientated in an unlocked position, such that the walls defining the slots 56 are substantially parallel with the flat surfaces of the blade. In addition, the arms 36, 38 are substantially horizontal. As such, upper portion 4' of blade 4 can be located in the blade location channel and inserted through slots 56 until the top of the blade locates against the inside walls of the housing defining recess 68.

Release of gripping portion 58 by the user causes member 64 to move in a downwardly direction to the locked position, shown in figures 1a and 1b. This movement causes arms 36, 38 to pivot through an acute angle as a result of movement of second free ends 46 in slots 48, 50 of the user actuation means, such that slots 56 of said arms move out of alignment with blade location channel 70 and are acutely angled with respect to the blade location channel. The flat surface 71 of blade 4 is therefore pushed against the interior wall 72 of the housing opposite to the user actuation means and is clamped in position. The blade 4 cannot be released in this position since the slots 56 in the arms are not aligned with the blade location channels. The lower edge of each arm defining each slot 56 engages with the opposite surface 74 of blade 4 to the surface engaged against interior wall 72. Thus, blade 4 is engaged between the interior surface of the housing and the clamping members.

The housing and components located therein can be formed from plastic or metal or any other suitable material as required.

Thus it can be seen that the present invention provides a novel clamping device which allows clamping of any tool component therewith.

## Claims

1. A clamping device for a tool component, said clamping device including a housing with a tool component location channel defined therein for the location of at least a part of a tool component in use, said clamping device further including one or more clamping members movably mounted in said housing, **characterised in that** said clamping members are capable of moving between a locked position, wherein the tool component can be clamped between one or more surfaces of said clamping members and one or more walls defining the tool component location channel, and an unlocked position, wherein the tool component can be inserted or removed from the clamping device.

2. A clamping device according to claim 1 **characterised in that** user actuation means are provided to move said clamping members between said locked and unlocked positions.

3. A clamping device according to claim 2 **characterised in that** at least a part of said user actuation means are accessible from the exterior of the housing.

4. A clamping device according to claim 2 **characterised in that** the user actuation means have resilient biasing means to bias the clamping members to said locked position.

5. A clamping device according to claim 4 **characterised in that** the resilient biasing means are in the form of a spring.

6. A clamping device according to claim 1 **characterised in that** the one or more clamping members are pivotally mounted in a cavity in the housing.

7. A clamping device according to claim 1 **characterised in that** a cavity in the housing in which the clamping members are mounted communicates with the tool component location channel also defined in the housing.

8. A clamping device according to claim 1 **characterised in that** two clamping members are movably mounted in the housing a spaced distance apart.

9. A clamping device according to claim 8 **characterised in that** the two clamping members move substantially simultaneously on movement of user actuation means.

10. A clamping device according to claim 8 **characterised in that** the two clamping members are moved in parallel to each other on movement of the user actuation means.

11. A clamping device according to claim 2 **characterised in that** each clamping member has a first end movably mounted in the housing and a second free end located with said user actuation means.

12. A clamping device according to claim 11 **characterised in that** said second free end is integrally formed with said user actuation means.

13. A clamping device according to claim 11 **characterised in that** said second free end is attached to said user actuation means via suitable attachment means.

14. A clamping device according to claim 13 **characterised in that** a recess or aperture is provided in said user actuation means in which the second free end locates in use.

15. A clamping device according to claim 1 **characterised in that** at least one slot is provided in said clamping members and, in said unlocked position, said slot is aligned with and substantially parallel to the tool component location channel.

16. A clamping device according to claim 15 **characterised in that** in said locked position, the slot is moved to a position where it is out of alignment with said tool component location channel.

17. A clamping device according to claim 15 **characterised in that** at least part of the tool component is located through said slot when clamping a tool component in use.

18. A clamping device according to claim 16 **characterised in that** in said locked position, the tool component is clamped between one or more edges of the walls of the clamping members defining the slot and one or more surfaces of the tool component location channel.

19. A clamping device according to claim 1 **characterised in that** said clamping members are in the form of an elongate arm with at least one slot provided transversally therethrough.

20. A clamping device according to claim 1 **characterised in that** the tool component is a saw blade.

21. A clamping device according to claim 20 **characterised in that** the saw blade has two flat surfaces which have a larger surface area than two end surfaces, the flat surfaces of the saw blade being clamped between one or more interior walls of the housing and the clamping members in said locked position.

22. A clamping device according to claim 1 **characterised in that** the housing is provided in two or more parts which are joined together on assembly of the device.

23. A clamping device according to claim 1 **characterised in that** the housing of the clamping device is attached to a scroll mechanism of the tool in use via attachment means.

24. A method of using a clamping device for a tool component, said clamping device including a housing with a tool component location channel defined therein and one or more clamping members movably mounted in said housing, **characterised in that** said method includes the steps of moving said clamping members between an unlocked position, wherein at least part of the tool component can be located in the tool component location channel and a locked position, wherein the tool component is clamped between one or more surfaces of said clamping members and one or more walls defining the tool component location channel.

25. A clamping device for clamping a tool component, said clamping device including a housing defining a cavity therein for the location of a portion of the tool component, one or more clamping members movably mounted in said cavity and said clamping members movable between a first locked position, wherein the tool component is clamped by said clamping members in a required position in the housing, and a second unlocked position, wherein the tool component is releasable from the clamping members, **characterised in that** the one or more clamping members are provided with one or more slots through which a part of the tool component is located through or removed from in said unlocked position.
